# EUROPÄISCHE PATENTANMELDUNG

(11) **EP 1 749 852 A1**
(43) Veröffentlichungstag der Anmeldung: **07.02.2007**
(21) Anmeldenummer: 06015523.1
(22) Anmeldetag: 26.07.2006
(51) Int. Cl.: C08K 5/00, C08K 5/53

(54) **Flammschutzmittelzubereitung**

(30) Priorität: 04.08.2005 DE 102005036653
(71) Anmelder: LANXESS Deutschland GmbH, 51369 Leverkusen (DE)
(72) Erfinder: Hansel, Jan-Gerd, Dr., 51069 Köln (DE); Feldhues, Ulrich, Dr., 51465 Bergisch Gladbach (DE); Maurer, Otto, Dr., 42799 Leichlingen (DE)

(57) **Zusammenfassung**

Die vorliegende Erfindung betrifft Zubereitungen aus Metallsalzen organischer Phosphonsäuren, die sich durch hohe thermische Beständigkeit auszeichnen, zum Einsatz als Flammschutzmittel in technischen Thermoplasten, sowie ein Verfahren zur Herstellung dieser Zubereitungen.

## Beschreibung

Die vorliegende Erfindung betrifft Zubereitungen aus Metallsalzen organischer Phosphonsäuren, die sich durch hohe thermische Beständigkeit auszeichnen zum Einsatz als Flammschutzmittel in technischen Thermoplasten, sowie ein Verfahren zur Herstellung dieser Zubereitungen.

Technische Thermoplaste aus der Klasse der Polyester, wie zum Beispiel Polybutylenterephthalat oder Polyethylenterephthalat, oder aus der Klasse der Polyamide, wie zum Beispiel Polyamid 6 oder Polyamid 66, werden in großem Umfang für Anwendungen im Automobilsektor, im Baubereich und vor allem im Elektro/Elektronik-Bereich verwendet. Häufig wird bei diesen Anwendungen gefordert, dass die eingesetzten Polymerzubereitungen flammwidrig sind. Die Flammwidrigkeit wird durch die Einarbeitung von Flammschutzmitteln in die Thermoplaste erreicht. Die Einarbeitung erfolgt im Allgemeinen während der Compoundierung, wobei der rohe Thermoplast bis zur Bildung einer flüssigen Schmelze erhitzt wird und als Schmelze mit den Flammschutzmitteln und gegebenenfalls anderen Zusätzen vermischt wird. Das dabei erhaltene Compound kann dann durch geeignete Verfahren weiter verarbeitet werden, zum Beispiel zu einem Granulat. Auch bei der anschließenden Fertigung von Formkörpern, etwa durch Extrusion oder Spritzguss, wird das Compound als heiße Schmelze verarbeitet.

Im Laufe von Compoudierung und Weiterverarbeitung wird das Compound also hohen Temperaturen ausgesetzt. Polybutylenterephthalat wird unverstärkt bei 240 - 260 °C und glasfaserverstärkt bei 250 - 270 °C verarbeitet. Bei kürzeren Verweilzeiten ist auf geeigneten Mischern auch eine Verarbeitung bei 280 - 285 °C möglich. Polyethylenterephthalat wird bei 265 - 285 °C verarbeitet. Die Schmelzetemperaturen bei der Verarbeitung von Polyamid 6 liegen bei 260 - 270 °C und von Polyamid 66 bei 270 - 300 °C. Insbesondere bei verstärkten Thermoplasten muss wegen der inneren Reibung mit noch höheren Spitzentemperaturen gerechnet werden. Details dazu sind zum Beispiel zu finden im Kunststoff-Handbuch, Ed. G. W. Becker, D. Braun, Band III/1, S. 46 - 47, 86 - 87, Hanser-Verlag, München 1992 und Band III/4, S. 335, Hanser-Verlag, München 1998.

Von den eingesetzten Flammschutmitteln wird gefordert, dass sie sich bei diesen Temperaturen verarbeiten lassen, ohne dass die mit ihnen hergestellte, flammgeschützte Thermoplastzubereitung Schaden nimmt. In der technischen Anwendung von Flammschutzmitteln ist man bestrebt, bei möglichst hoher Temperatur zu arbeiten, weil mit steigender Temperatur die Schmelzeviskosität erniedrigt wird, wodurch eine bessere Durchmischung und ein höherer Durchsatz erzielt werden kann.

Aus dem Stand der Technik sind Flammschutzmittel auf Basis von Bor-, Stickstoff-, Phosphor-, Chlor-, Brom-, Antimon-, Magnesium- oder Aluminium-haltigen Substanzen bekannt, zum Beispiel aus R. Gächter, H. Müller "Taschenbuch der Kunststoff-Additive", Hanser-Verlag, München, Wien, 3. Ausgabe 1990, S. 768 - 770, E. D. Weil, S. V. Levchik, J. Fire Sci. 2004, 22, 251 - 264 und E. D. Weil, S. V. Levchik, J. Fire Sci. 2004, 22, 339 - 350.

In der jüngeren Vergangenheit sind einige der chlor- und bromhaltigen Flammschutzmittel in den Verdacht geraten, schädliche Wirkungen auf Mensch und Umwelt auszuüben. In Europa wurde daraufhin ihre Anwendung in der Elektro- und Elektronikbranche strengen Regelungen unterworfen, wie beispielsweise in den Richtlinien 2002/95/EC (RoHS) und 2002/96/EC (WEEE) dokumentiert.

Halogenfreie Metallsalze von organischen Phosphonsäuren oder organischen Phosphonsäuremonoestem wurden in EP 0 245 207 B1 (US 4 972 011) als Flammschutzmittel beschrieben. Demnach lassen sich mit diesen Metallphosphonaten durch Compoundierung bei 270 °C flammwidrige Polyamid-Zubereitungen (EP 0 245 207 B1, Beispiel 29 - 31) und Polyester-Zubereitungen (EP 0 245 207 B1, Beispiel 32 - 34) herstellen.

Bei der Verwendung solcher Metallphosphonate gemäß der in EP 0 245 207 B1 beschriebenen Weise beobachtet man jedoch bei Temperaturen oberhalb von 270 °C Zersetzungserscheinungen. Die Thermoplastschmelze wirft Blasen und erstarrt zu spröden, unbrauchbaren Massen. Dieses Phänomen lässt sich auf eine exotherme Zersetzung der Metallphosphonate bei etwa 270 °C zurückführen (siehe Vergleichsbeispiele), wie sie durch Differential-Scanning-Kalorimetrie (DSC) nachweisbar ist. Angesichts der oben genannten, üblichen Verarbeitungstemperaturen für Polyester und Polyamide stellt die Begrenzung der Verarbeitungstemperatur auf maximal 270 °C eine erhebliche Einschränkung der Anwendbarkeit solcher Metallphosphonate dar.

Die Aufgabe dieser Erfindung ist es daher, Metallsalze organischer Phosphonsäuren oder organischer Phosphonsäuremonoester mit gegenüber dem Stand der Technik verbesserter thermischer Beständigkeit bereitzustellen.

Überraschend wurde gefunden, dass die Gegenwart kleiner Mengen von Alkalimetallverbindungen in Zubereitungen von Metallphosphonaten deren thermische Beständigkeit im Vergleich zur thermischen Beständigkeit der reinen Metallphosphonate merklich erhöht.

Gegenstand dieser Erfindung sind Zubereitungen enthaltend
(A) mindestens 90 % eines oder mehrerer Metallsalze organischer Phosphonsäuren oder organischer Phosphonsäuremonoester und
(B) mindestens eine Metallverbindung, deren Metall von dem der Komponente (A) verschieden ist und deren Metallgehalt 50 bis 50 000 ppm bezogen auf die gesamte Zubereitung beträgt, wobei das Metall vorzugsweise ausgewählt ist aus der Gruppe bestehend aus den Alkalimetallen Li, Na oder K.

Bevorzugt enthalten die erfindungsgemäßen Zubereitungen als Komponente (A) mindestens ein Metallsalz einer Phosphonsäure der Formel (I) 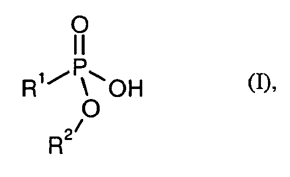 worin
- R¹: für einen verzweigten oder unverzweigten Alkylrest mit 1 - 8 C-Atomen, besonders bevorzugt für einen unverzweigten Alkylrest mit 1 - 4 C-Atomen, und
- R²: für Wasserstoff oder für einen verzweigten oder unverzweigten Alkylrest mit 1 - 8 C-Atomen, besonders bevorzugt für einen unverzweigten Alkylrest mit 1 - 4 C-Atomen,
stehen.

Das Metall wird bevorzugt ausgewählt aus der Gruppe bestehend aus Mg, Ca, Sr, Ba, B, Al, Ga, Si, Ge, Sn, Sb, Ti, Fe, Mn und Zn.

Bevorzugt handelt es sich bei der Phosphonsäure der Formel (I) um Methanphosphonsäure, Methanphosphonsäuremonomethylester, Ethanphosphonsäure, Ethanphosphonsäuremonoethylester, Propanphosphonsäure, Propanphosphonsäuremonomethylester, 1-Methylpropanphosphonsäure, 1-Methylpropanphosphonsäuremonomethylester, 2-Methylpropanphosphonsäure, 2-Methylpropanphosphonsäuremonomethylester, n-Butanphosphonsäure oder n-Butanphosphonsäuremonomethylester.

Besonders bevorzugt enthält die Komponente (A) Aluminium-*tris*(monomethylmethanphosphonat), Calciummethanphosphonat, Zinkmethanphosphonat, Aluminium-*tris*(monomethylpropanphosphonat), Calciumpropanphosphonat und/oder Zinkpropanphosphonat.

Die als Komponente (B) enthaltenen Metallverbindungen sind bevorzugt Salze der Alkalimetalle Li, Na und/oder K. Diese Salze können beispielsweise die gegebenenfalls wasserfreien Fluoride, Chloride, Bromide, Sulfate, Phosphate, Pyrophosphate, Carbonate, Silicate, Borate oder Aluminate der Alkalimetalle Li, Na und/oder K sein. Auch Mischungen dieser Salze können als Komponente (B) enthalten sein. Besonders bevorzugt handelt es sich bei Komponente (B) um Natriumverbindungen.

Bevorzugt beträgt der Metallgehalt von Komponente (B) 100 bis 10 000 ppm, besonders bevorzugt 500 bis 5 000 ppm bezogen auf die gesamte Zubereitung.

Die erfindungsgemäßen Zubereitungen können nach bekannten Methoden hergestellt werden, beispielweise aus den bekannten Metallphosphonaten und Alkalimetallverbindungen. Bevorzugt werden sie nach dem unten beschriebenen Herstellverfahren hergestellt.

In einer bevorzugten Ausführungsform enthalten die erfindungsgemäßen Zubereitungen 90,0 bis 99,9 % der Komponte (A), besonders bevorzugt 90,1 bis 99,5 % der Komponente (A).

Gegenstand dieser Erfindung ist damit auch ein Verfahren zur Herstellung von Zubereitungen enthaltend
(A) mindestens 90 % eines oder mehrerer Metallsalze organischer Phosphonsäuren oder organischer Phosphonsäuremonoester und
(B) mindestens eine Metallverbindung, deren Metall von dem der Komponente (A) verschieden ist und deren Metallgehalt 50 bis 50 000 ppm bezogen auf die gesamte Zubereitung beträgt, wobei das Metall vorzugsweise ausgewählt ist aus der Gruppe bestehend aus den Alkalimetallen Li, Na oder K,
dadurch gekennzeichnet, dass eine mindestens 30%ige, wässrige Lösung eines Lithium-, Natrium- und/oder Kaliumsalzes einer Phosphonsäure oder eines Phosphonsäuremonoesters mit einer wässrigen Lösung oder Suspension eines Metallsalzes umgesetzt wird und der ausfallende Feststoff isoliert wird.

Bevorzugt wird die wässrige Lösung eines Lithium-, Natrium- und/oder Kaliumsalzes einer Phosphonsäure der Formel (I) 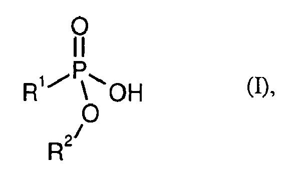 eingesetzt, worin
- R¹: für einen verzweigten oder unverzweigten Alkylrest mit 1 - 8 C-Atomen, besonders bevorzugt für einen unverzweigten Alkylrest mit 1 - 4 C-Atomen, und
- R²: für Wasserstoff oder für einen verzweigten oder unverzweigten Alkylrest mit 1 - 8 C-Atomen, besonders bevorzugt für einen unverzweigten Alkylrest mit 1 - 4 C-Atomen,
stehen.

Besonders bevorzugt wird die wässrige Lösung eines Lithium-, Natrium- und/oder Kaliumsalzes der Methanphosphonsäure, des Methanphosphonsäuremonomethylesters, der Ethanphosphonsäure, des Ethanphosphonsäuremonoethylesters, der Propanphosphonsäure, des Propanphosphonsäuremonomethylesters, der 1-Methylpropanphosphonsäure, des 1-Methylpropanphosphonsäuremonomethylesters, der 2-Methylpropanphosphonsäure, des 2-Methylpropanphosphonsäuremonomethylesters, der n-Butanphosphonsäure oder des n-Butanphosphonsäuremonomethylesters eingesetzt.

Ganz besonders bevorzugt werden die Natriumsalze der oben genannten Phosphonsäuren oder Phosphonsäuremonoester eingesetzt.

Das Metallsalz wird bevorzugt ausgewählt aus der Gruppe bestehend aus den zumindest teilweise wasserlöslichen Salzen von Mg, Ca, Sr, Ba, B, Al, Ga, Si, Ge, Sn, Sb, Ti, Fe, Mn und Zn. Bei den zumindest teilweise wasserlöslichen Salzen der vorgenannten Metalle kann es sich zum Beispiel um die gegebenenfalls kristallwasserhaltigen Metallchloride, Metallnitrate, Metallsulfate, Metallhydroxide oder Metalloxide handeln.

Besonders bevorzugt handelt es sich bei dem Metallsalz um ein gegebenenfalls kristallwasserhaltiges Aluminiumchlorid, Aluminiumnitrat, Aluminiumsulfat, Aluminiumhydroxid, Zinkchlorid, Zinknitrat, Zinksulfat, Zinkoxid, Calciumchlorid, Calciumnitrat oder Calciumhydroxid oder um Mischungen dieser Salze.

Bevorzugt wird das Verfahren bei Temperaturen zwischen 10 und 95 °C, besonders bevorzugt zwischen 15 und 80 °C durchgeführt.

Bevorzugt ist die wässrige Lösung des Lithium-, Natrium- und/oder Kaliumsalzes einer Phosphonsäure oder eines Phosphonsäuremonoesters mindestens 35%ig. Alle % Angaben in der vorliegenden Beschreibung sind Gew.-%.

In Bezug auf das Mischungsverhältnis der Komponente (A) und (B) bei der Herstellung der erfindungsgemäßen Zubereitungen gelten die bereits oben genannten Vorzugsbereiche.

Das erfindungsgemäße Verfahren kann in üblichen Reaktionsgefäßen in ansatzweiser oder kontinuierlicher Arbeitsweise durchgeführt werden. Bevorzugt werden die Reaktanden bei der Umsetzung innig miteinander vermischt. Die Isolierung des Feststoffes ist durch übliche Trennverfahren möglich, beispielsweise durch Filtration, Sedimentation oder Zentrifugation. Bevorzugt wird der Feststoff durch Filtration isoliert. Der isolierte Feststoff kann weiter gereinigt werden, zum Beispiel durch Wäsche. Bevorzugt schließt die Isolierung des Feststoffs als letzten Verfahrensschritt eine Trocknung ein. Dazu können übliche Trockner verwendet werden. Es ist auch möglich, den Feststoff durch Sprühtrocknung zu isolieren.

Die erfindungsgemäßen Zubereitungen beziehungsweise die durch das erfindungsgemäße Verfahren erhältlichen Zubereitungen zeichnen sich durch eine erhöhte thermische Stabilität aus. Sie sind daher besser geeignet, als Zubereitungen wie sie aus dem Stand der Technik bekannt sind, um alleine oder in Kombination mit anderen Flammschutzmitteln zur flammwidrigen Ausrüstung von technischen Thermoplasten eingesetzt zu werden. Insbesondere sind sie besser geeignet, um in technischen Thermoplasten wie zum Beispiel Polyestern oder Polyamiden gegebenenfalls in Kombination mit anderen Flammschutzmitteln wie beispielsweise Melamin, Melaminderivaten, Metallhydroxiden oder anorganischen Phosphaten als Flammschutzmittel oder Antidripping-Mittel eingesetzt zu werden.

Die vorliegende Erfindung betrifft aber auch die Verwendung der erfindungsgemäßen Zubereitungen als Flammschutzmittel, bevorzugt in technischen Thermoplasten, die mindestens einen Polyester oder mindestens ein Polyamid enthalten, besonders bevorzugt Polybutylenterephthalat, Polyethylenterephthalat, Polyamide, insbesondere bevorzugt Polyamid 6 und Polyamid 66.

Die vorliegende Erfindung betrifft ferner Formteile erhältlich durch Extrusion oder Spritzgießen der oben genannten technischen Thermoplaste enthaltend die erfindungsgemäßen Zubereitungen sowie ein Verfahren zur Ausrüstung jener technischen Thermoplaste mit Flammschutzmitteln, dadurch gekennzeichnet, dass man die erfindungsgemäßen Zubereitungen einsetzt.

Schließlich betrifft die vorliegende Erfindung Formkörper oder Formteile enthaltend technische Thermoplaste die mit den erfindungsgemäßen Zubereitungen als Flammschutzmittel ausgerüstet sind sowie die Verwendung der erfindungsgemäßen Zubereitungen zur Herstellung flammgeschützter technischer Thermoplaste bzw. Formkörper oder Formteile, insbesondere in der Elektro- und Elektronikindustrie.

Ein weiterer Aspekt der vorliegenden Erfindung ist die Kombination der erfindungsgemäßen Zubereitungen mit anderen Flammschutzmitteln als Antidripping-Mittel.

Anhand der nachfolgenden Beispiele wird die Erfindung näher erläutert, ohne dass dadurch eine Einschränkung der Erfindung bewirkt werden soll.

### Beispiele

Die angegebenen Teile beziehen sich auf das Gewicht.

### Vergleichsbeispiel V1 (nach EP 0 245 207 B1, Beispiel 9)

Zu 304 Teilen Dimethylpropanphosphonat wurden unter Rühren portionsweise 53,4 Teile wasserfreies Aluminiumchlorid gegeben. Dabei bildete sich eine Suspension eines weißen Feststoffs, die mit 152 Teilen Dimethylpropanphosphonat verdünnt wurde. Nach Ende der Aluminiumchlorid-Zugabe wurde 2 h bei 140 °C getempert. Schließlich wurde auf Raumtemperatur abgekühlt, mit 316 Teilen Aceton verdünnt, filtriert und dreimal mit 80 Teilen Aceton nachgewaschen. Nach Trocknen bei 120 °C und 100 mbar verblieben 172,6 Teile weißer Feststoff.

| Elementaranalyse für C₁₂H₃₀AlO₉P₃: | | | |
|---|---|---|---|
| Berechnet: | C 32,9 % | H 6,9 % | Na 0,0 ppm |
| Gefunden: | C 33,0 % | H 6,9 % | Na < 0,1 ppm |

IR (KBr): 2961 s, 2875 m, 2851 m, 1467 m, 1408 w, 1379 w, 1346 m, 1250 s, 1177 s, 1109 s, 1058 s, 1034 s, 906 w, 846 s, 817 s, 758 m, 717 w, 601 m, 483 s cm⁻¹.

### Vergleichsbeispiel V2

Zu 5490 Teilen einer 26,2%igen, wässrigen Lösung des Natriumsalzes des Propanphosphonsäuremonomethylesters wurde unter Rühren bei 80 °C innerhalb von 1 h 2069 Teile einer 47,8%igen, wässrigen Lösung von technischem Aluminiumsulfat-Hydrat (17 % Al₂O₃) getropft. Es wurde 1,5 h bei 80°C nachgerührt, auf 30 °C abgekühlt, abgesaugt und mit 2700 Teilen Wasser gewaschen. Nach Trocknen bei 120 °C und 100 mbar verblieben 1236,7 Teile weißer Feststoff.

| Elementaranalyse für C₁₂H₃₀AlO₉P₃: | | | |
|---|---|---|---|
| Berechnet: | C 32,9 % | H 6,9 % | Na 0 ppm |
| Gefunden: | C 32,9 % | H 6,8 % | Na 20 ppm |

IR (KBr): 2963 s, 2876 m, 2852 m, 1468 m, 1409 w, 1379 w, 1347 m, 1251 s, 1177 s, 1108 s, 1056 s, 1034 s, 906 w, 846 s, 816 s, 758 m, 717 w, 602 m, 482 s cm⁻¹.

### Beispiel 1

Zu 1030 Teilen einer 38,8%igen Lösung des Natriumsalzes des Propanphosphonsäuremonomethylesters wurden unter Rühren bei 25 °C innerhalb von 1 h 575 Teile einer 47,8%igen, wässrigen Lösung von technischem Aluminiumsulfat-Hydrat (17 % Al₂O₃) getropft. Es wurde 2 h nachgerührt, abgesaugt und mit 2000 Teilen Wasser gewaschen. Nach Trocknen bei 120 °C und 100 mbar verblieben 301,2 Teile weißer Feststoff.

| Elementaranalyse für C₁₂H₃₀AlO₉P₃: | | | |
|---|---|---|---|
| Berechnet: | C 32,9 % | H 6,9 % | Na 0 ppm |
| Gefunden: | C 32,8 % | H 6,7 % | Na 780 ppm |

IR (KBr): 2963 s, 2875 m, 2852 m, 1468 m, 1408 w, 1379 w, 1346 m, 1251 s, 1177 s, 1108 s, 1056 s, 1034 s, 904 w, 846 s, 816 s, 758 m, 717 w, 602 m, 481 s cm⁻¹.

### Beispiel 2

1030 Teile einer 38,8%igen Lösung des Natriumsalzes des Propanphosphonsäuremonomethylesters und 575 Teile einer 47,8%igen, wässrigen Lösung von technischem Aluminiumsulfat-Hydrat (17 % Al₂O₃) wurden unter Rühren bei 25 °C innerhalb von 1 h gleichzeitig zu 50 Teilen Wasser getropft. Es wurde 2 h nachgerührt, abgesaugt und mit 3000 Teilen Wasser in zwei Portionen gewaschen. Nach Trocknen bei 120 °C und 100 mbar verblieben 289,7 Teile weißer Feststoff.

| Elementaranalyse für C₁₂H₃₀AlO₉P₃: | | | |
|---|---|---|---|
| Berechnet: | C 32,9 % | H 6,9 % | Na 0 ppm |
| Gefunden: | C 32,6 % | H 6,7 % | Na 640 ppm |

IR (KBr): 2962 s, 2876 m, 2852 m, 1468 m, 1409 w, 1379 w, 1347 m, 1252 s, 1177 s, 1108 s, 1056 s, 1034 s, 906 w, 846 s, 816 s, 758 m, 717 w, 602 m, 482 s cm⁻¹.

### Thermische Beständigkeit

Die thermische Beständigkeit der Metallphosphonat-Zubereitungen aus den nicht erfindungsgemäßen Vergleichsbeispielen und den erfindungsgemäßen Beispielen wurde mittels DSC untersucht. Dabei wurden Proben von ca. 10 mg an Luft im offenen Tiegel bei einer Aufheizrate von 10 °C/min von 20 °C auf 450 °C erhitzt. In der Tabelle ist für jede Probe die Peaktemperatur des ersten exothermen Peaks als Zersetzungstemperatur angegeben.

**Tabelle: Natriumgehalte und thermische Beständigkeiten in den nicht erfindungsgemäßen Vergleichsbeispielen V1 und V2 und den erfindungsgemäßen Beispielen 1 und 2**

| **Beispiel** | **Na-Gehalt, ppm** | **Zersetzungstemperatur ,°C** |
|---|---|---|
| **V1** | <0,1 | 275 |
| **V2** | 20 | 270 |
| **1** | 780 | 286 |
| **2** | 640 | 289 |

### Ergebnisse

In den Vergleichsbeispielen V1 und V2 und in den Beispielen 1 und 2 wurde als Hauptkomponente das aus EP 0 245 207 B1, Beispiel 9, bekannte Aluminium-tris(monomethylpropanphosphonat) hergestellt. Die Infrarot(IR)-Spektren aller hergestellten Proben weisen keine signifikanten Unterschiede auf. Dies zeigt, dass die Hauptkomponente der Proben unabhängig vom Verfahren identisch ist. Die Ergebnisse der C,H-Elementaranalysen stimmen innerhalb einer Fehlergrenze von 0,3 % mit den für reines Aluminium-*tris*(monomethylpropanphosphonat) berechneten Werten überein.

Die Vergleichsbeispiele V 1 und V2 zeigen, dass unabhängig vom Herstellweg bei einem niedrigen Natriumgehalt im Metallphosphonat eine Zersetzungstemperatur zwischen 270 und 275 °C zu beobachten ist.

In den erfindungsgemäßen Beispielen 1 und 2 zeigt sich, dass bei Verwendung einer konzentrierteren Lösung des Natriumsalzes des Propanphosphonsäuremonomethylesters Produkte mit erhöhtem Natriumgehalt erhalten werden. Diese Produkte zeichnen sich durch eine Zersetzungstemperatur von über 285 °C aus und erhöhen damit im Vergleich zum Stand der Technik die möglichen Verarbeitungstemperaturen technischer Thermoplaste um mehr als 10 °C.

## Patentansprüche

1. Zubereitungen enthaltend
(A) mindestens 90 % eines oder mehrerer Metallsalze organischer Phosphonsäuren oder organischer Phosphonsäuremonoester und
(B) mindestens eine Metallverbindung, deren Metall von dem der Komponente (A) verschieden ist und deren Metallgehalt 50 bis 50 000 ppm bezogen auf die gesamte Zubereitung beträgt, wobei das Metall vorzugsweise ausgewählt ist aus der Gruppe bestehend aus den Alkalimetallen Li, Na oder K.

2. Zubereitungen gemäß Anspruch 1, **dadurch gekennzeichnet, dass** sie als Komponente (A) mindestens ein Metallsalz einer Phosphonsäure der Formel (I) 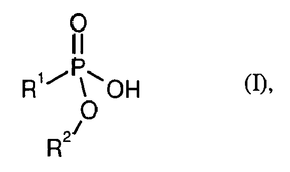 enthalten, worin
R¹ für einen verzweigten oder unverzweigten Alkylrest mit 1 - 8 C-Atomen, und
R² für Wasserstoff oder für einen verzweigten oder unverzweigten Alkylrest mit 1 - 8 C-Atomen,
stehen.

3. Zubereitungen gemäß Anspruch 1 und/oder 2, **dadurch gekennzeichnet, dass** als Komponente (A) mindestens ein Metallsalz der Methanphosphonsäure, des Methanphosphonsäuremonomethylesters, der Ethanphosphonsäure, des Ethanphosphonsäuremonoethylesters, der Propanphosphonsäure, des Propanphosphonsäuremonomethylesters, der 1-Methylpropanphosphonsäure, des 1-Methylpropanphosphonsäuremonomethylesters, der 2-Methylpropanphosphonsäure, des 2-Methylpropanphosphonsäuremonomethylesters, der n-Butanphosphonsäure oder des n-Butanphosphonsäuremonomethylesters enthalten ist.

4. Zubereitungen gemäß mindestens einem der Ansprüche 1 bis 3, **dadurch gekennzeichnet, dass** das in dem Metallsalz der Komponente (A) enthaltene Metall aus der Gruppe bestehend aus Mg, Ca, Sr, Ba, B, Al, Ga, Si, Ge, Sn, Sb, Ti, Fe, Mn und Zn ausgewählt ist.

5. Zubereitungen gemäß mindestens einem der Ansprüche 1 bis 4, **dadurch gekennzeichnet, dass** in Komponente (A) Aluminium-*tris*(monomethylmethanphosphonat), Calciummethanphosphonat, Zinkmethanphosphonat, Aluminium-*tris*(monomethylpropanphosphonat), Calciumpropanphosphonat und/oder Zinkpropanphosphonat enthalten ist.

6. Verwendung der Zubereitungen gemäß Ansprüchen 1 bis 5 als Flammschutzmittel.

7. Verwendung der Zubereitungen gemäß Ansprüchen 1 bis 5 als Flammschutzmittel für technische Thermoplaste, die mindestens einen Polyester oder mindestens ein Polyamid enthalten.

8. Verwendung der Zubereitungen gemäß Ansprüchen 1 bis 5 alleine oder in Kombinationen mit anderen Flammschutzmitteln als Antidripping-Mittel.

9. Verfahren zur Herstellung von Zubereitungen enthaltend
(A) mindestens 90 % eines oder mehrerer Metallsalze organischer Phosphonsäuren oder organischer Phosphonsäuremonoester und
(B) mindestens eine Metallverbindung, deren Metall von dem der Komponente (A) verschieden ist und deren Metallgehalt 50 bis 50 000 ppm bezogen auf die gesamte Zubereitung beträgt, wobei das Metall vorzugsweise ausgewählt ist aus der Gruppe bestehend aus den Alkalimetallen Li, Na oder K,
**dadurch gekennzeichnet, dass** eine mindestens 30 %ige, wässrige Lösung eines Lithium-, Natrium- und/oder Kaliumsalzes einer Phosphonsäure oder eines Phosphonsäuremonoesters mit einer wässrigen Lösung oder Suspension eines Metallsalzes umgesetzt wird und der ausfallende Feststoff isoliert wird.

10. Formteile oder Formkörper enthaltend technische Thermoplaste, die mit den Zubereitungen gemäß der Ansprüche 1 bis 5 als Flammschutzmittel ausgerüstet sind.

11. Verwendung der Formteile oder Formkörper gemäß Anspruch 10 in der Elektro- und Elektronikindustrie.

12. Verfahren zur Herstellung der Formteile oder Formkörper durch Extrusion oder Spritzgießen von technischen Thermoplasten, die mit den Zubereitungen gemäß der Ansprüche 1 bis 5 ausgerüstet sind.
